# EUROPEAN PATENT APPLICATION

(11) **EP 1 375 442 A1**
(43) Date of publication of application: **02.01.2004**
(21) Application number: 03253617.9
(22) Date of filing: 09.06.2003
(51) Int. Cl.: C03B 23/20, C03B 32/02, C03C 10/00

(54) **Method of direct bonding and crystallisation of Glass**

(30) Priority: 13.06.2002 JP 2002173298
(71) Applicant: Kabushiki Kaisha Ohara, Sagamihara-shi, Kanagawa 229-1186 (JP)
(72) Inventor: Minamikawa, Hiroyuki, Sagamihara-shi, Kanagawa 229-1104 (JP)
(74) Representative: Dealtry, Brian

(57) **Abstract**

A method for producing a crystallized glass member, the method includes: precisely polishing each surface of two or more crystallizable original glass components having an identical composition so that the polished surfaces to be brought into contact with each other have a flatness of λ (633 nm) or less; heating the glass components to a first temperature in a glass transition region while the surfaces are brought into contact with each other so as to fuse the glass components; and heating an original glass member prepared by fusing the glass components at a second temperature which is higher than the first temperature in the glass transition region, so as to crystallize and bond the original glass member.

## Description

### BACKGROUND OF THE INVENTION

### Field of the Invention

The present invention relates to a method for producing a glass member. In particular, the present relates to a method for producing a glass member, the method including precisely polishing two or more glass components so that each of the glass components has a flatness of λ (633 nm) or less, and heating the glass components while the polished surfaces thereof are brought into contact with each other so as to fuse them.

### Description of Related Art

As a method for bonding optical members of identical or different types such as ceramic, glass, crystallized glass and metal, there is a well-known method in which the optical members are bonded by using an inorganic optical adhesive (a ceramic, a low melting point glass, etc.). However, when members of an identical type, in particular, glasses, are bonded by using an inorganic adhesive, since there is a difference in the coefficient of thermal expansion between the inorganic adhesive and the glass to be bonded, there is a problem that the expansion characteristics deteriorate in the case of a glass having a characteristic coefficient of thermal expansion. Among the inorganic adhesives, when a glass having a low melting point is used, the bonding strength is degraded due to bubbles generated at the bonding interface. In particular, since the thickness of a bonding layer easily varies, it is difficult to maintain the accuracy in shape and dimensions.

There is also a well known method (optical bonding, optical contact) in which members such as quartz or crystalline materials are bonded together by bringing optical surfaces into close contact with each other. This method seems to be very effective because the members are directly bonded together. However, since the members are bonded by making dangling bonds of bonding faces of the glass come close to each other, it is necessary for the bonding surfaces to have very high smoothness. A high strength bonding cannot be expected unless the polished surfaces have a flatness of λ/4 or better (Japanese Patent Application Publication (Unexamined) No. 09-309053). Furthermore, in order to improve the bonding strength, a heat treatment is generally carried out after the bonding. The heat treatment requires a high temperature of 1000°C or more, for example, 1300°C (Japanese Patent Application Publication (Unexamined) No. 11-012099).

Japanese Patent Application Publication (Unexamined) No. 02-64034 discloses a method for bonding glass in which, after a material in a crystallizable glass state is processed into a predetermined shape, this material and a member to be bonded are heated so as to carry out the crystallization while the surfaces of the two are brought into contact with each other. In this publication, a glass having a coefficient of thermal expansion of 113 (x 10⁻⁷ K⁻¹) is cited as an example.

### SUMMARY OF THE INVENTION

It is an object of the present invention to provide a method for producing a glass member, the method enabling optical surfaces to be bonded well without requiring high precision polishing to obtain a flatness of λ/4 or better, or requiring a heat treatment at a high temperature of 1000°C or more. In particular, it is an object thereof to provide a method for producing a glass member that enables optical surfaces to be bonded, the method being suitable for the production of a low expansion crystallized glass member.

As a result of an intensive investigation by the inventor in order to achieve the above-mentioned objects, the following has been found. When members of an identical type are bonded, a crystallizable original glass that has been processed into a predetermined shape and predetermined dimensions is polished so that the bonding surfaces have a flatness on the order of λ (633 nm). The polished surfaces are superimposed. The members are heated to a temperature in the vicinity of the glass transition temperature. The members are joined at the temperature over a sufficient period of time. Then, the members can be united without requiring a high precision polishing to obtain a flatness of λ/4 or better, or requiring a heat treatment at a high temperature of 1000°C or more. Subsequently, when the members are crystallized under normal crystallization heat treatment conditions, the bonding can be further improved. The present invention has thus been accomplished.

That is, in accordance with a first aspect of the present invention, a method for producing a crystallized glass member, the method comprises: precisely polishing each surface of two or more crystallizable original glass components having an identical composition so that the polished surfaces to be brought into contact with each other have a flatness of λ (633 nm) or less; heating the glass components to a first temperature in a glass transition region while the surfaces are brought into contact with each other so as to fuse the glass components; and heating an original glass member prepared by fusing the glass components at a second temperature which is higher than the first temperature in the glass transition region, so as to crystallize and bond the original glass member.

After the glass components are heated to the first temperature in the glass transition region while the surfaces are brought into contact with each other so as to fuse the glass components, the original glass member prepared by fusing the glass components may be heated at a crystal nucleation temperature which is higher than the first temperature, so as to form crystal nuclei, and the original glass member may be crystallized and bonded at a crystal growth temperature which is higher than the crystal nucleation temperature.

The first temperature in the glass transition region may be in the range of 600°C to 700°C.

The crystal nucleation temperature may be in the range of 650°C to 750°C.

The crystal growth temperature may be in the range of 750°C to 840°C.

The crystallized glass member has a coefficient of thermal expansion in the range of -5x10⁻⁷ to +5x10⁻⁷ /K when the coefficient of thermal expansion is measured in the range of -60°C to +160°C.

After the glass components are heated to the first temperature in the glass transition region while the surfaces are brought into contact with each other so as to fuse the glass components, the original glass member may be cooled to a room temperature, and may be formed into a predetermined shape, and the original glass member may be heated at the second temperature which is higher than the first temperature so as to crystallize and bond the original glass member.

The identical composition may be a following composition in mass percent of: SiO₂ 50% to 62%; P₂O₅ 5% to 10%; a total amount of SiO₂ + P₂O₅ being 55% to 70% and P₂O₅/SiO₂ being 0.08 to 0.20 as a ratio by mass; Al₂O₃ 22% to 26%; Li₂O 3% to 5%; MgO 0.6% to 2%; ZnO 0.5% to 2%; CaO 0.3% to 4%; BaO 0.5% to 4%; TiO₂ 1% to 4%; ZrO₂ 1% to 4%; and As₂O₃ 0% to 2%.

In accordance with a second aspect of the present invention, a method for producing a glass member, the method comprises: precisely polishing each surface of two or more glass components having an identical composition so that the polished surfaces to be brought into contact with each other have a flatness of λ (633 nm) or less, and heating the glass components to a temperature in a glass transition region while the surfaces are brought into contact with each other so as to fuse the glass components.

According to the glass member producing method of the present invention, in two or more glass components having an identical composition, the surfaces to be brought into contact with each other, are precisely polished so that each of the polished surfaces has a flatness of λ (633 nm) or less. In this case, λ denotes the wavelength of a He-Ne laser used when the flatness is measured by a laser interferometer. In order to bond a plurality of glass components without optical discontinuity, it is necessary to precisely polish a glass to obtain a flatness of λ or less. In order to carry out the precision polishing economically, it is preferable to be a flatness of larger than λ/4.

The glass components are, furthermore, heated and fused while the surfaces are brought into contact with each other. The heating temperature is preferably a temperature in the glass transition region. In this case, the temperature in the glass transition region means a temperature in the vicinity of the glass transition temperature of the used glass, at which the glass can be fused. The glass is transformed from a solid state to a liquid state at the glass transition temperature. By heating the glasses at a temperature in the glass transition region, the glasses can be sufficiently bonded when the surfaces have a flatness on the order of λ, whereas the optical contact generally requires the flatness of λ/4 or less. The temperature in the glass transition region depends on the glass composition, but it is preferably in the range of, for example, 600°C to 700°C. This treatment is preferably carried out over a sufficient length of time so as to sufficiently fuse the glass components. It is preferably 2 hours or more, and more preferably 5 hours or more.

Optionally, a slight amount of pressure of, for example, about 1 Kgf/cm² or less, can be applied to the surfaces to be bonded during the heat treatment. Thereby, the glasses can be bonded more effectively.

The two or more glass components having an identical composition are preferably two or more crystallizable original glass components that have an identical composition. Subsequent crystallization increases the mechanical strength of the glass member and enables a desired coefficient of thermal expansion to be designed.

In the crystallized glass member producing method of the present invention, the original glass member produced by fusing the glass components is heated at a higher temperature so as to crystallize it. By crystallizing the original glass member crystallized by this heating forms sufficiently strong bonding. Although it is possible to obtain the sufficient bonding by the fusion due to the heating at a temperature in the glass transition region, the glass can be crystallized in the vicinity of a bonding interface and the bonding interface can be eliminated by the further crystallization heat treatment. Further, the bonding can be strengthened. This heat treatment is preferably carried out in two stages, that is, a step of forming crystal nuclei at a crystal nucleation temperature and a step of growing crystals throughout the glass at a crystal growth temperature which is higher than the temperature in the glass transition region. The crystal nucleation temperature and the crystal growth temperature depend on the composition of the original glass, however, the former is preferably in the range of 650°C to 750°C, and the latter is preferably in the range of 750°C to 840°C.

In the crystallized glass member producing method of the present invention, as a crystallizable original glass, one having a known composition can be suitably used. However, the method is effective for producing a low expansion material and, in particular, a very low expansion crystallized glass member. In general, when optical components having low thermal expansion properties are bonded by using an inorganic adhesive to form an optical member, it is difficult to design a desired coefficient of thermal expansion as a whole because of the influence of the coefficient of thermal expansion of the inorganic adhesive. Even in such a case, the present invention can suitably produce a crystallized glass member having a desired low coefficient of thermal expansion. More specifically, the present invention can be applied to a very low expansion crystallized glass member having the coefficient of thermal expansion in the range of -5 x 10⁻⁷ to +5 x 10⁻⁷ /K when the coefficient of thermal expansion is measured in the range of -60°C to +160°C.

With regard to the original glass that is used in the crystallized glass member producing method of the present invention, for example, an SiO₂-Al₂O₃-Li₂O-nucleation agent system glass that deposits a (3-quartz solid solution as a main crystallized phase, can be used. In particular, when a glass disclosed in Japanese Patent Application Publication (Unexamined) No. 8-133783, that is, a original glass having the composition is mass percent of, SiO₂ 50% to 62%; P₂O₅ 5% to 10%; a total amount of SiO₂ + P₂O₅ being 55% to 70% and P₂O₅/SiO₂ being 0.08 to 0.20 as a ratio by mass; Al₂O₃ 22% to 26%; Li₂O 3% to 5%; MgO 0.6% to 2%; ZnO 0.5% to 2%; CaO 0.3% to 4%; BaO 0.5% to 4%; TiO₂ 1% to 4%; ZrO₂ 1% to 4%; and As₂O₃ 0% to 2%, is used, the coefficient of thermal expansion of the obtained crystallized glass member is not different from the coefficient of thermal expansion of the bulk body, and the strong bonding can be realized.

In the crystallized glass member producing method of the present invention, after the glass components are heated to a temperature in the glass transition region while the surfaces are brought into contact with each other so as to fuse the glass components, the original glass member is cooled to a room temperature, and is formed into a predetermined shape, and the original glass member can be reheated at a temperature which is higher than the temperature in the glass transition region, so as to crystallize and bond the original glass member. In general, a crystallized glass formed by crystallizing an amorphous glass has an increased hardness (Vickers hardness) and a decreased polishing rate. Therefore, in a step of forming the original glass member into a predetermined shape and predetermined dimensions, a glass to be handled as a material is softer and is processed more easily than a crystallized glass to be processed after the crystallization. Although there is some possibility that the volume of the glass shrinks during the crystallization, the volume can be previously corrected by processing the glass into a shape and dimensions. In this embodiment of the present invention, since the original glass member is polished to obtain a flatness on the order of λ, this case is more advantageous than a case where a crystallized glass is polished.

### BRIEF DESCRIPTION OF THE DRAWINGS

The present invention will become more fully understood from the detailed description given hereinbelow and the accompanying drawings which are given by way of illustration only, and thus are not intended as a definition of the limits of the present invention, and wherein;
FIG. 1 shows the position that a sample was obtained for the measurement of thermal expansion in the glass joined by the method of Example 1;
FIG. 2 is a graph showing a comparison between a precise thermal expansion curve of a block and that of a sample obtained from a joined body formed by the method of Example 2;
FIGS. 3A and 3B show a box-shaped structure prior to the join in Example 3; and
FIGS. 4A and 4B shows the box-shaped structure joined by the method of Example 3.

### PREFERRED EMBODIMENT OF THE INVENTION

The glass member producing method according to the present invention is now explained in detail by reference to Examples. The flatness was measured by using a GPI interferometer (light source: 633 nm) manufactured by Zygo Corporation.

### Example 1:

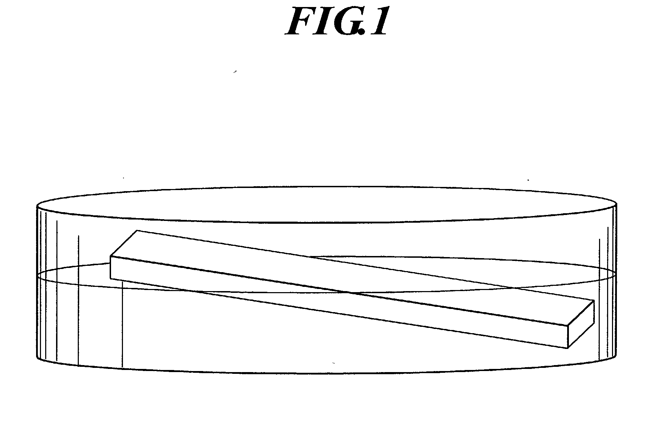

In order to prepare a glass having a composition in mass percent of SiO₂ 55%; P₂O₅ 6% (P₂O₅/SiO₂ = 0.11 as a ratio by mass); Al₂O₃ 26%; Li₂O 3.9%; MgO 1.4%; ZnO 1.0%; CaO 1.6%; BaO 1.5%; TiO₂ 1.6%; ZrO₂ 1.0%; and As₂O₃ 1.0%, normally employed glass raw materials such as oxides, carbonates, nitrates, and phosphates were weighed, mixed and melted by using a platinum crucible in an electric furnace at 1500°C. After the melted raw materials were defoamed and homogenized, the raw materials were casted by a mold, formed into a desired shape, and then annealed to obtain a block in a crystallizable perfect glass state. This block was then cut, processed, and polished to prepare two sheets of φ 100 x 4.45 mmt polished glass. The flatness thereof was measured. As a result of the measurement, a bonding surface of one sheet had a PV of 297 nm, and a bonding surface of the other sheet had a PV of 446 nm. They were superimposed in a clean room and heated in a hot air furnace so as to raise the temperature to 683°C which is a transition temperature of this glass, for 5 h. The glass was maintained at this temperature for 10 h and cooled to a room temperature. After it is confirmed that the glass had cooled to a room temperature, this sample was taken out of the furnace. When the glasses are partially bonded, an interference pattern is usually observed visually in a part that is not bonded. In this sample, no interference pattern was observed over the entire superimposed area, and it was thus confirmed that the sheets were bonded. This sample was then crystallized in the same hot air furnace under the crystallization heat treatment conditions (nucleation temperature: 720°C, crystallization temperature: 820°C). The thickness of the crystallized sample was measured by using an ultrasonic thickness meter (effective measurement area: 5 mm). When an area that is not bonded is measured by using the ultrasonic thickness meter, usually the thickness of only one sheet in the sample is detected. When several points on the bonded surfaces were measured by using this thickness meter, the thickness detected was 8.9 mm, which corresponded to two sheets of the glass, and it was thus confirmed that they were united by the bonding. Furthermore, this sample was cut so that the bonded part was centered (FIG. 1), and when its expansion was measured, a value of α = 1 x 10⁻⁷ K⁻¹ was obtained. This value coincided with an expansion value of a very low expansion crystallized glass, and it was thus confirmed that the sample obtained by the above-mentioned bonding method was united. The expansion was measured by using a commercial expansion meter in which the significant figure was one digit in the 10⁻⁷ column.

### Example 2:

In order to prepare a glass having a composition in mass percent, SiO₂ 56%; P₂O₅ 8.7% (P₂O₅/SiO₂ = 0.15 as a ratio by mass); Al₂O₃ 22%; Li₂O 4.2%; MgO 1.3%; ZnO 0.6%; CaO 0.9%; BaO 0.7%; TiO₂ 2.1%; ZrO₂ 1.5%; and As₂O₃ 1.0%; normally employed glass raw materials such as oxides, carbonates, nitrates, and phosphates were weighed, mixed and melted by using a platinum crucible in an electric furnace at 1520°C or lower. After the melted raw materials were defoamed and homogenized, the raw materials were casted by a mold, formed into a desired shape, and then annealed to obtain a block in a crystallizable perfect glass state. As in Example 1, this block was then cut, processed, and polished to prepare ten sheets of φ 100 x 4.45 mmt polished glass. The flatness thereof was measured. Front and rear surfaces of 10 sheets had a PV in the range of 200 to 600 nm. Ten sheets of the glasses were superimposed in a clean room, and directly crystallized in a hot air furnace. In this case, the heat treatment conditions (nucleation temperature: 700°C, crystallization temperature: 790°C) were as follows. The heating time was 1.5 times longer than that of Example 1 (the temperature increasing rate was 12°C/h in the region of ± 10°C of the glass transition temperature) so that the sample was heated slowly around the glass transition temperature (673°C).

The thickness of the crystallized sample was measured by using an ultrasonic thickness meter (effective measurement area: 5 mm) as in Example 1. The thickness was 44.5 mm, which coincided with the thickness of 10 sheets of the glasses, and thus it was confirmed that they were united by the bonding.

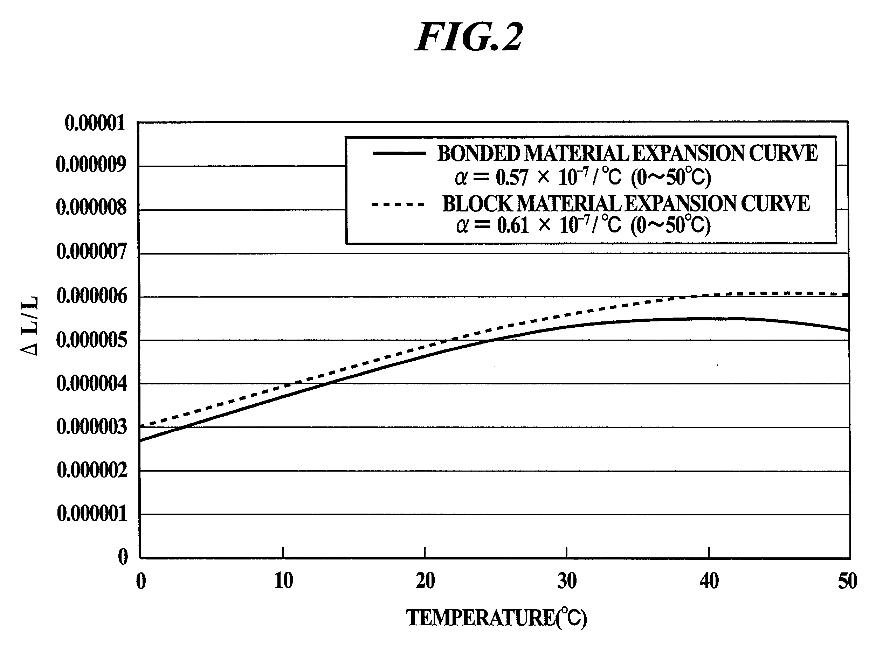

The bonded sample was then processed into a sample for a precise expansion measurement (accuracy:± 0.2 x 10⁻⁷ K⁻¹). and a precise expansion measurement was carried out. A glass block obtained by the above melting was also crystallized, and a sample for precise expansion was prepared therefrom to compare the glass block with the bonded sample (FIG. 2). As a result, the coefficient of thermal expansion α (0 to 50°C) of the sample having 10 sheets bonded was 0.57 x 10⁻⁷ K⁻¹, which was almost the same as a coefficient of thermal expansion α of 0.61 x 10⁻⁷ K⁻¹ for the sample obtained from the crystallized block. the thermal expansion curves were also almost identical. When the expansion measurement equipment having a very high accuracy was used, the coefficients of thermal expansion of the two samples coincided with each other. This indicates that the glass was bonded sufficiently by this method.

### Example 3:

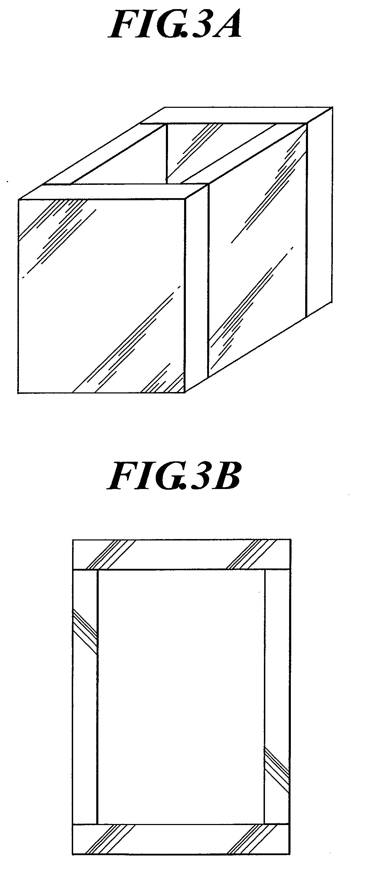

In order to prepare a glass having a composition in mass percent of, SiO₂ 56%; P₂O₅ 8.7% (P₂O₅/SiO₂ = 0.15 as a ratio by mass); Al₂O₃ 22%; Li₂O 4.2%; MgO 1.3%; ZnO 0.6%; CaO 0.9%; BaO 0.7%; TiO₂ 2.1%; ZrO₂ 1.5%; and As₂O₃ 1.0%, normally employed glass raw materials such as oxides, carbonates, nitrates, and phosphates were weighed, mixed and melted by using a platinum crucible in an electric furnace at 1520°C or lower. After the melted raw materials were defoamed and homogenized, the raw materials were casted by a mold, formed into a desired shape, and then annealed to obtain a block in a crystallizable perfect glass state. Four 100 mm square x 10 mmt plates were prepared from this block. Their surfaces to be joined (both sides and end faces) were polished. When the flatness of the surfaces to be joined was measured the PV value was 364 to 552 nm. These plates were formed into a box shape (FIG. 3) in a clean room, and directly crystallized in a hot air furnace. In this case, the heat treatment conditions (nucleation temperature: 700°C, crystallization temperature: 790°C) were as follows. The heating time was 1.5 times longer than that of Example 1 (the temperature increasing rate was 12°C/h in the region of ± 10°C of the glass transition temperature) so that the sample was heated slowly around the glass transition temperature (673°C).

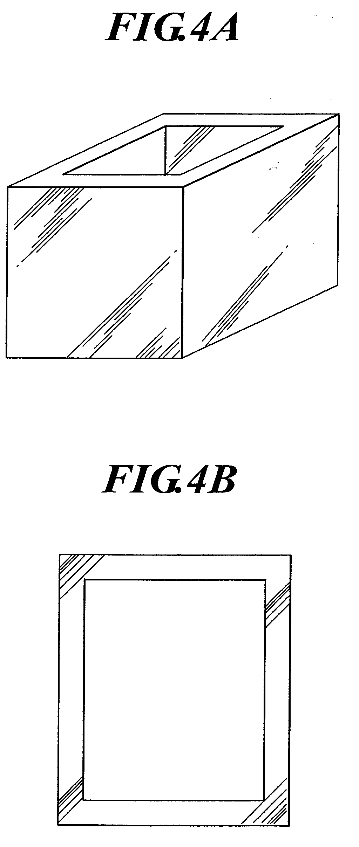

After the crystallization, the bonded surfaces were inspected visually. No interference pattern was observed over the whole bonded area. It was confirmed that the bonding surfaces were bonded over the whole region. The box-shaped structure prepared in Example 3 is shown in FIG. 4.

As described above, according to the present invention, since the strong bonding can be realized by bonding comparatively easily crystallizable glasses prior to crystallization or during a crystallization heat treatment and then crystallizing them, the problems relating to former bonding methods for glass materials of an identical type, such as a difference in the coefficient of expansion due to an adhesive of a different type and the necessity for high precision polishing, can be resolved. Furthermore, since the heat treatment during the bonding does not require a high temperature that either causes a phase transition of a crystallized phase deposited in a crystallized glass or causes the deposition of crystals having a different phase, the method according to the present invention is most suitably used for very low expansion glass and zero expansion glass, which are often used as precision members. Moreover, since the processing and polishing can be carried out on a sample in a glass state, complicated structures in which the characteristics of the glass are utilized to the utmost and structures in which large members are joined together can be produced.

The entire disclosure of Japanese Patent Application No. Tokugan 2002-173298 filed on June 13, 2002 including specification, claims drawings and summary are incorporated herein by reference in its entirety.

## Claims

1. A method for producing a crystallized glass member, the method comprising:
precisely polishing each surface of two or more crystallizable original glass components having an identical composition so that the polished surfaces to be brought into contact with each other have a flatness of 633 nm or less;
heating the glass components to a first temperature in a glass transition region while the surfaces are brought into contact with each other so as to fuse the glass components; and
heating an original glass member prepared by fusing the glass components at a second temperature which is higher than the first temperature in the glass transition region, so as to crystallize and bond the original glass member.

2. The method for producing the crystallized glass member as claimed in claim 1, wherein after the glass components are heated to the first temperature in the glass transition region while the surfaces are brought into contact with each other so as to fuse the glass components, the original glass member prepared by fusing the glass components is heated at a crystal nucleation temperature which is higher than the first temperature, so as to form crystal nuclei, and the original glass member is crystallized and bonded at a crystal growth temperature which is higher than the crystal nucleation temperature.

3. The method for producing the crystallized glass member as claimed in claim 2, wherein the first temperature in the glass transition region is in the range of 600°C to 700°C.

4. The method for producing the crystallized glass member as claimed in claim 2 or 3, wherein the crystal nucleation temperature is in the range of 650°C to 750°C.

5. The method for producing the crystallized glass member as claimed in any one of claims 2 to 4, wherein the crystal growth temperature is in the range of 750°C to 840°C.

6. The method for producing the crystallized glass member as claimed in any one of claims 1 to 5, wherein the crystallized glass member has a coefficient of thermal expansion in the range of -5x10⁻⁷ to +5x10⁻⁷ /K when the coefficient of thermal expansion is measured in the range of -60°C to +160°C.

7. The method for producing the crystallized glass member as claimed in any one of claims 1 to 6, wherein after the glass components are heated to the first temperature in the glass transition region while the surfaces are brought into contact with each other so as to fuse the glass components, the original glass member is cooled to a room temperature, and is formed into a predetermined shape, and the original glass member is heated at the second temperature which is higher than the first temperature so as to crystallize and bond the original glass member.

8. The method for producing the crystallized glass member as claimed in any one of claims 1 to 7, wherein the identical composition is a following composition in mass percent of:
| | |
|---|---|
| SiO₂ | 50% to 62%; |
| P₂O₅ | 5% to 10%; |
| a total | amount of SiO₂ + P₂O₅ being 55% to 70% and |
| P₂O₅/SiO₂ being 0.08 to 0.20 as a ratio by mass; | |
| Al₂O₃ | 22% to 26%; |
| Li₂O | 3% to 5%; |
| MgO | 0.6% to 2%; |
| ZnO | 0.5% to 2%; |
| CaO | 0.3% to 4%; |
| BaO | 0.5% to 4%; |
| TiO₂ | 1% to 4%; |
| ZrO₂ | 1% to 4%; and |
| AS₂O₃ | 0% to 2%. |

9. A method for producing a glass member, the method comprising:
precisely polishing each surface of two or more glass components having an identical composition so that the polished surfaces to be brought into contact with each other have a flatness of 633 nm or less, and
heating the glass components to a temperature in a glass transition region while the surfaces are brought into contact with each other so as to fuse the glass components.
